# EUROPEAN PATENT APPLICATION

(11) **EP 3 901 483 A1**
(43) Date of publication of application: **27.10.2021**
(21) Application number: 21169163.9
(22) Date of filing: 19.04.2021
(51) Int. Cl.: F16D 3/18, F16D 3/06

(54) **EXTENDABLE SHAFT**

(30) Priority: 22.04.2020 JP 2020076205
(71) Applicant: JTEKT CORPORATION, Chuo-ku, Osaka-shi, Osaka 542-8502 (JP)
(72) Inventor: NEZU, Toshihiro, Osaka-shi,, 542-8502 (JP); TANO, Atsushi, Osaka-shi,, 542-8502 (JP); TSUJI, Naoki, Osaka-shi,, 542-8502 (JP)
(74) Representative: Winter, Brandl - Partnerschaft mbB

(57) **Abstract**

An extendable shaft (5) includes: an inner shaft (35) including a plurality of external teeth (41); an outer shaft (36) including a plurality of internal teeth (39) that slides relatively to the external teeth (41); and a resin layer (50) covering the external teeth (41). The pressure angle of the external teeth (41) is different from the pressure angle of the internal teeth (39).

## Description

### BACKGROUND OF THE INVENTION

### 1. Field of the Invention

The present invention relates to an extendable shaft.

### 2. Description of Related Art

Japanese Patent Application Publication No. 2014-238173 discloses an extendable shaft that is integrated in a vehicle steering device. This extendable shaft is formed by fitting an inner shaft having a plurality of external teeth and a cylindrical outer shaft having a plurality of internal teeth by means of splines so as to be able to slide along an axial direction as well as transmit torque. A resin layer is formed on an outer circumferential surface of the inner shaft.

### SUMMARY OF THE INVENTION

When the inner shaft and the outer shaft slide relatively to each other, the load of these sliding shafts may cause the resin layer to move toward the base side and the tip side of the internal teeth. As a result, the area of contact of the resin layer that comes into contact with the internal teeth of the outer shaft increases, which potentially leads to deterioration in sliding characteristics.

The present invention allows an extendable shaft to undergo a smaller increase in the area of contact of the resin layer with the internal teeth and thereby less deterioration in its sliding characteristics.

An aspect of the present invention is an extendable shaft. The extendable shaft includes an inner shaft including a plurality of external teeth, an outer shaft including a plurality of internal teeth that slides relatively to the external teeth, and a resin layer covering the external teeth. The pressure angle of the external teeth is different from the pressure angle of the internal teeth.

This configuration allows the extendable shaft to undergo a smaller increase in the area of contact of the resin layer with the internal teeth and thereby less deterioration in its sliding characteristics.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a vehicle steering device having an intermediate shaft to which an extendable shaft according to an embodiment is applied;
FIG. 2 is a partially cutaway side view showing the intermediate shaft according to the embodiment;
FIG. 3 is a sectional view showing a cross-sectional shape at a part of the intermediate shaft according to the embodiment;
FIG. 4 is a flowchart showing the flow of a manufacturing method of the intermediate shaft according to the embodiment;
FIG. 5 is a sectional view showing a close-up of a side surface of a resin layer according to the embodiment; and
FIG. 6 is a sectional view showing a close-up of a side surface of a resin layer according to a comparative example.

### DETAILED DESCRIPTION OF EMBODIMENTS

An embodiment will be specifically described below with reference to the drawings. The embodiment to be described below represents a comprehensive or specific example. Numerical values, shapes, materials, constituent elements, positions of arrangement and forms of connection of the constituent elements, etc. are examples and not intended to limit the present invention. Those of the constituent elements in the following embodiment that are not described in the independent claim that shows the primary concept will be described as optional constituent elements.

The drawings are schematic views in which some parts are exaggerated, omitted, or adjusted in proportion as necessary to show the present invention, and the shapes, positional relationships, and proportions in the drawings may be different from the actual ones.

### Overview of Vehicle Steering Device

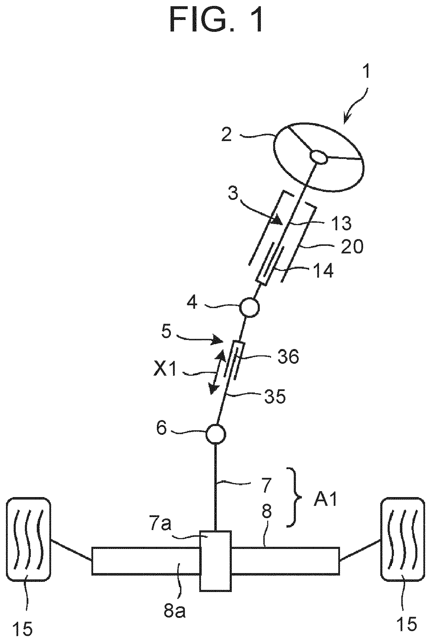

FIG. 1 is a schematic configuration diagram of a vehicle steering device having an intermediate shaft to which an extendable shaft according to the embodiment is applied. As shown in FIG. 1, a vehicle steering device 1 includes: a steering shaft 3 coupled to a steering member 2, such as a steering wheel; an intermediate shaft 5 as an extendable shaft that is coupled to the steering shaft 3 through a universal joint 4; a pinion shaft 7 coupled to the intermediate shaft 5 through a universal joint 6; and a rack shaft 8 as a turning shaft that has a rack 8a that meshes with a pinion 7a provided near an end of the pinion shaft 7.

A rack-and-pinion mechanism including the pinion shaft 7 and the rack shaft 8 constitutes a turning mechanism A1. The rack shaft 8 is supported by a housing (not shown) so as to be movable in an axial direction that lies along a left-right direction of the vehicle. Each end of the rack shaft 8 is coupled to a corresponding turning wheel 15 though a corresponding tie rod and a corresponding knuckle arm.

The steering shaft 3 is supported on a vehicle body side through a steering column 20.

### Structure of Intermediate Shaft

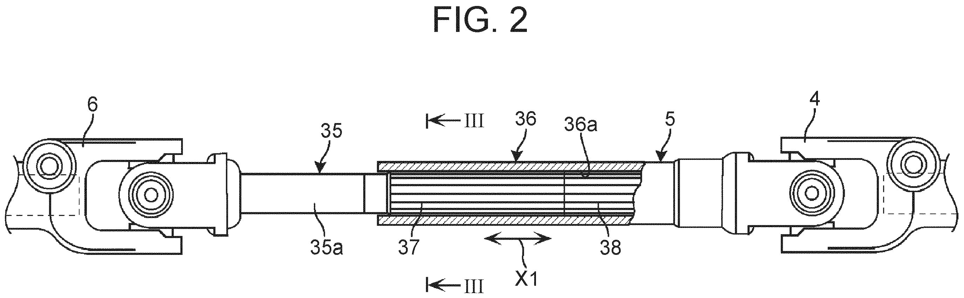

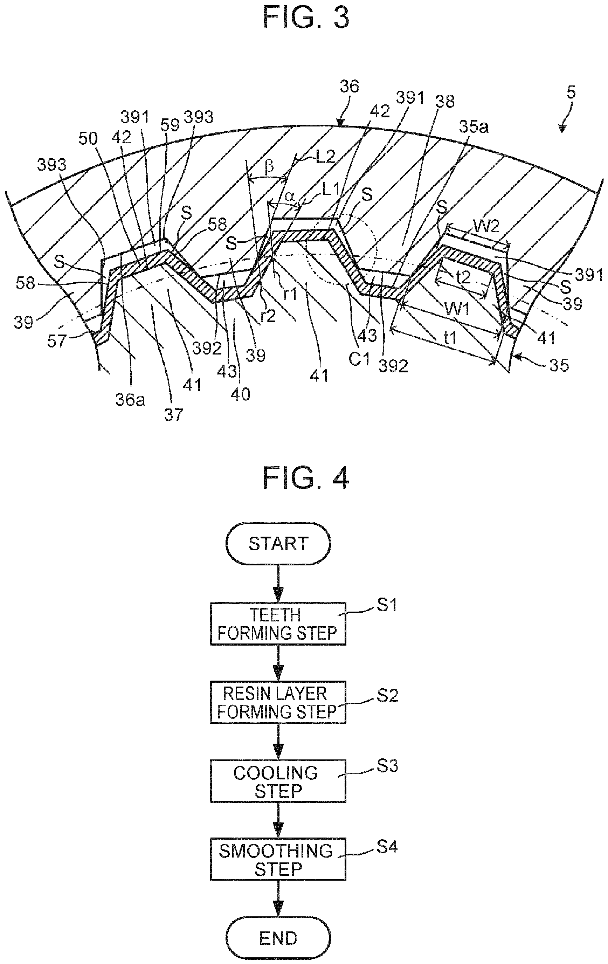

FIG. 2 is a partially cutaway side view showing the intermediate shaft 5 according to the embodiment. FIG. 3 is a sectional view taken along line III-III of FIG. 2, showing a cross-sectional shape at a part of the intermediate shaft 5 according to the embodiment.

As shown in FIG. 1 to FIG. 3, the intermediate shaft 5 as an extendable shaft is formed by fitting an inner shaft 35 and a cylindrical outer shaft 36 together by means of splines so as to be able to slide along an axial direction X1 as well as to transmit torque. In this embodiment, the outer shaft 36 is coupled to the universal joint 4 as an upper shaft, and the inner shaft 35 is coupled to the universal joint 6 as a lower shaft. However, the present invention is not limited to this form; either one of the inner shaft 35 and the outer shaft 36 should constitute an upper shaft and the other one should constitute a lower shaft.

While this embodiment will be described based on the case where the extendable shaft is applied to the intermediate shaft 5, the extendable shaft of the present invention may instead be applied to the steering shaft 3 and the steering shaft 3 may fulfil a telescopic adjustment function and an impact absorbing function. Further, while this embodiment will be described based on the case where the vehicle steering device 1 is a manual steering device, the extendable shaft of the present invention may instead be applied to an electric or hydraulic power steering device.

An external spline 37 is formed on an outer circumferential surface 35a of the inner shaft 35. An internal spline 38 is formed on an inner circumferential surface 36a of the outer shaft 36. The external spline 37 and the internal spline 38 are slidable in the axial direction in a state of being fitted together in a circumferential direction, and as the inner shaft 35 and the outer shaft 36 move relatively to each other, the intermediate shaft 5 extends and contracts as a whole.

Next, the inner shaft 35 will be described in detail. The inner shaft 35 has a shaft body 40 and a resin layer 50. The shaft body 40 is a member elongated along the axial direction X1. The shaft body 40 is made of a metal having a relatively small specific gravity. Specifically, the shaft body 40 is integrally molded from aluminum or aluminum alloy. The shaft body 40 is a columnar body and has the external spline 37 formed on an outer circumferential surface thereof. At one end of the shaft body 40, a plurality of external teeth 41 is formed on the outer circumferential surface. The external teeth 41 form the external spline 37. The external teeth 41 are provided radially around a shaft center of the shaft body 40. The number of the external teeth 41 to be provided should be at least two in the circumferential direction, but four or more external teeth 41 are preferable from the viewpoint of stable torque transmission characteristics.

Each external tooth 41 extends along the axial direction X1. Thus, a plurality of grooves 43 that is portions between the external teeth 41 in the circumferential direction also extends along the axial direction X1. Each external tooth 41 has a tapered shape with a tip surface 42. In the external tooth 41, when the tooth thickness on a base side is a first tooth thickness t1 and the tooth thickness on a tip side is a second tooth thickness t2, the ratio of the second tooth thickness t2 to the first tooth thickness t1 (first ratio) is t2 / t1. A pressure angle α of the external tooth 41 is an acute angle that is formed by a line r1 of the radius of the external tooth 41 and a tangent L1 to the tooth face of the external tooth 41 at a point in the tooth face (e.g., a pitch point).

The resin layer 50 is made of a resin material, such as polyamide resin, and covers an outer circumferential surface of each external tooth 41 (or the external spline 37). Specifically, the resin layer 50 directly covers each of the external teeth 41 and the grooves 43 to a substantially even thickness. The resin layer 50 gives a substantially uniform shape to the profile of the external spline 37 along the axial direction X1. A surface of the resin layer 50 that corresponds to the tip surface 42 of each external tooth 41 will be referred to as a tooth tip surface 59. Surfaces of the resin layer 50 that are adjacent to each tooth tip surface 59 will be referred to as side surfaces 58, and a surface thereof that corresponds to each bottom land will be referred to as a bottom land surface 57.

Next, the outer shaft 36 will be described in detail. The outer shaft 36 is a cylindrical body and has the internal spline 38 formed on the inner circumferential surface 36a. The internal spline 38 has a plurality of internal teeth 39 that respectively meshes with the external teeth 41. Each internal tooth 39 extends along the axial direction X1. Thus, a plurality of tooth grooves 391 that is portions between adjacent pairs of internal teeth 39 among the internal teeth 39 also extends along the axial direction X1. One external tooth 41 is disposed in each tooth groove 391. The internal teeth 39 have a tapered shape with a tip surface 392. In the tooth groove 391, when the width on a top side is a first groove width W1 and the width on a bottom side is a second groove width W2, the ratio of the second groove width W2 to the first groove width W1 (second ratio) is W2 / W1. A pressure angle β of the internal tooth 39 is an acute angle that is formed by a line r2 of the radius of the internal tooth 39 and a tangent L2 to the tooth face of the internal tooth 39 at a point in the tooth face (e.g., a pitch point). The pressure angle β of the internal teeth 39 is smaller than the pressure angle α of the external teeth 41. In other words, the pressure angle α of the external teeth 41 is larger than the pressure angle β of the internal teeth 39. Accordingly, the first ratio is lower than the second ratio. Due to this relationship, one end of the tip surface 392 of the internal tooth 39 is in contact with the side surface 58 of the resin layer 50, but between the side surface 58 and the side surface 393 of the internal tooth 39, there is a clearance S of which the width increases gradually toward a radially outer side of the intermediate shaft 5.

### Manufacturing Method of Intermediate Shaft

Next, a manufacturing method of the intermediate shaft 5 that is an extendable shaft will be described. FIG. 4 is a flowchart showing the flow of the manufacturing method of the intermediate shaft 5 according to the embodiment.

As shown in FIG. 4, first, the shaft body 40 is formed by forming the external teeth 41 on a round metal bar (teeth forming step S1). In the teeth forming step S1, the external teeth 41 are formed on an outer circumferential surface of the round bar by, for example, performing drawing, cutting, or the like on the round bar.

Then, resin injection molding is performed on the shaft body 40 to form the resin layer 50 (resin layer forming step S2). Specifically, in the resin layer forming step S2, the resin layer 50 is formed by injection molding that involves housing the shaft body 40 in a mold and injecting resin into the mold. Thus, the resin layer 50 covering the external teeth 41 and the grooves 43 is formed.

Next, the shaft body 40 is cooled (cooling step S3). This cooling may be natural cooling or cooling using a cooling device. This cooling cures the resin layer 50.

Next, the inner shaft 35 is joined to the outer shaft 36 in which the internal spline 38 has been formed on the inner circumferential surface, and a smoothing step S4 is executed. The smoothing step S4 is a step of sliding the inner shaft 35 and the outer shaft 36 relatively to each other and thereby heating and melting the resin layer 50. Frictional heat generated by this relative sliding melts part of the resin layer 50.

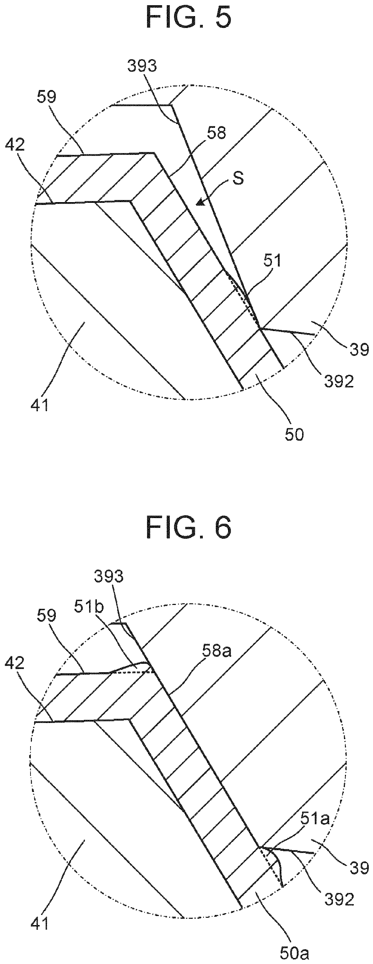

FIG. 5 is a sectional view showing a close-up of the side surface 58 of the resin layer 50 according to the embodiment. FIG. 5 shows a close-up of the inside of circle C1 of FIG. 3. In FIG. 5, the shape of the side surface 58 before the smoothing process is indicated by a broken line. As shown in FIG. 5, the clearance S is left between the side surface 58 of the resin layer 50 and the side surface 393 of the internal tooth 39, so that part of the resin layer 50 melted by the smoothing step S4 moves toward the clearance S and bulges, thereby forming a bulge 51. The bulge 51 may partially come into contact with the side surface 393 of the internal tooth 39.

Here, FIG. 6 is a sectional view showing a close-up of a side surface 58a of a resin layer 50a according to a comparative example. Also in FIG. 6, the shape of the side surface 58a before the smoothing process is indicated by a broken line. The comparative example differs from the embodiment in that the pressure angle β of the internal teeth 39 and the pressure angle α of the external teeth 41 are substantially equal. Accordingly, in the comparative example, the first ratio and the second ratio are substantially equal, and therefore there is no clearance S or an extremely small clearance S compared with that in the embodiment. For this reason, when the smoothing step S4 is performed in the comparative example, melted part of the resin layer 50a moves toward the tooth tip surface 59 and the bottom land surface 57 and bulge at two locations, thereby forming bulges 51a, 51b. The bulges 51a, 51b come into contact with the side surface 393 and the tip surface 392, respectively, of the internal tooth 39.

In this way, in the comparative example, the bulges 51a, 51b are formed at two locations, whereas in the embodiment, formation of the bulges 51a, 51b can be avoided as the bulge 51 is formed preferentially in the clearance S between the side surface 58 of the resin layer 50 and the side surface 393 of the internal tooth 39. Thus, the resin layer 50 undergoes a smaller increase in the area of contact with the tip surface 392 and the side surface 393 (tooth face) of the internal tooth 39 that does not contribute to torque transmission.

As has been described above, manufacturing of the intermediate shaft 5 includes the smoothing step S4 of sliding the inner shaft 35 and the outer shaft 36 relatively to each other and thereby heating and melting the resin layer 50, and this smoothing step S4 results in a smaller increase in the area of contact of the resin layer 50 with the internal teeth 39. Therefore, deterioration in sliding characteristics of the intermediate shaft 5 having undergone the smoothing step S4 can be more reliably reduced. Also in an intermediate shaft 5 that has not undergone the smoothing step S4, part of the resin layer 50 melts as the inner shaft 35 and the outer shaft 36 slide relatively to each other during normal use. In this case, too, the melted part of the resin layer 50 bulges only in the clearance S, so that the resin layer 50 undergoes a smaller increase in the area of contact with the internal teeth 39. Thus, deterioration in sliding characteristics of the intermediate shaft 5 that has not undergone the smoothing step S4 can also be reduced.

Here, since aluminum or aluminum alloy is lightweight, using aluminum or aluminum alloy for the shaft body 40 can reduce the weight of the intermediate shaft 5 (extendable shaft). On the other hand, aluminum or aluminum alloy has a relatively low melting point. Therefore, when aluminum or aluminum alloy is used for the shaft body 40 and a resin layer is applied by fluidized-bed coating, the strength of the shaft body 40 tends to become low due to the influence of heat produced during fluidized-bed coating. However, according to the extendable shaft and the manufacturing method thereof having been described above, since the resin layer 50 is formed by injection molding, a decrease in the strength of even the shaft body 40 that is made of aluminum or aluminum alloy can be avoided.

### Advantages

As has been described above, the ratio of the second tooth thickness t2 to the first tooth thickness t1 of the external tooth 41 (first ratio) is lower than the ratio of the second groove width W2 to the first groove width W1 of the tooth groove 391 (second ratio), so that the clearance S can be left between the side surfaces 58 of the resin layer 50 and the side surface of the internal tooth 39. Part of the resin layer 50 melted as the inner shaft 35 and the outer shaft 36 slide relatively to each other moves toward the clearance S and bulges. Thus, compared with when the resin layer 50 bulges at two locations as in the comparative example, the resin layer 50 undergoes a smaller increase in the area of contact with the internal teeth 39 that does not contribute to torque transmission. If the increase in the area of contact is smaller, less friction occurs when the inner shaft 35 and the outer shaft 36 slide relatively to each other, and therefore deterioration in sliding characteristics can be reduced.

Since the pressure angle α of the external teeth 41 is larger than the pressure angle β of the internal teeth 39, the relationship of the first ratio being lower than the second ratio can be reliably established by simply adjusting the pressure angles α, β. Compared with when the pressure angle β of the internal teeth 39 is larger than the pressure angle α of the external teeth 41, when the pressure angle α of the external teeth 41 is larger than the pressure angle β of the internal teeth 39 as in the embodiment, the distance from the center of rotation to a meshing position can be shortened, which in turn can reduce the torque acting at the meshing position. As a result, the resin layer 50 bulges toward the tip surfaces 392 of the internal teeth 39 to a smaller extent.

### Others

While the extendable shaft and the manufacturing method thereof according to the present invention have been described above based on the embodiment, the present invention is not limited to the above embodiment.

For example, in the embodiment, the relationship of the first ratio being lower than the second ratio is established by setting he pressure angle α of the external teeth 41 to be larger than the pressure angle β of the internal teeth 39. However, the external teeth 41 and the internal teeth 39 may have any shapes that make the first ratio lower than the second ratio.

In the above embodiment, the case where the pressure angle α of the external teeth 41 is larger than the pressure angle β of the internal teeth 39 has been illustrated. However, even when the pressure angle α of the external teeth 41 is smaller than the pressure angle β of the internal teeth 39, the resin layer 50 undergoes a somewhat smaller increase in the area of contact with the internal teeth 39. This means that the pressure angle α of the external teeth 41 should at least be different from the pressure angle β of the internal teeth 39.

In the above embodiment, the case where the shaft body 40 is made of aluminum has been illustrated. However, the shaft body 40 may be made of other metal. In this case, the resin layer 50 can be formed by fluidized-bed coating.

In addition, embodiments that incorporate various changes to the embodiment conceived by those skilled in the art and embodiments that are established by arbitrarily combining constituent elements and functions in the embodiment and the modified examples within the scope of the gist of the present invention are also included in the present invention.

The present invention is applicable to an extendable shaft of which the outer shaft has a resin layer.

## Claims

1. An extendable shaft (5) **characterized by** comprising:
an inner shaft (35) including a plurality of external teeth (41);
an outer shaft including a plurality of internal teeth (39) that slides relatively to the external teeth (41); and
a resin layer (50) covering the external teeth (41), wherein
a pressure angle of the external teeth (41) is different from a pressure angle of the internal teeth (39).

2. The extendable shaft (5) according to claim 1, **characterized in that** the pressure angle of the external teeth (41) is larger than the pressure angle of the internal teeth (39).
